(19) Europäisches Patentamt
European Patent Office
Office européen des brevets

(11) EP 0 840 441 B1

(12) EUROPÄISCHE PATENTSCHRIFT

(45) Veröffentlichungstag und Bekanntmachung des Hinweises auf die Patenterteilung:
**12.05.1999 Patentblatt 1999/19**

(51) Int Cl.[6]: **H02P 21/00**

(21) Anmeldenummer: **96117638.5**

(22) Anmeldetag: **04.11.1996**

(54) **Feldorientierte Regelung einer Drehfeldmaschine an der Spannungsdecke**

Field-oriented control for a rotating field machine operating at voltage limit

Régulation à orientation de champ en limite de tension pour une machine à champ tournant

(84) Benannte Vertragsstaaten:
**AT CH DE ES FR GB IT LI SE**

(43) Veröffentlichungstag der Anmeldung:
**06.05.1998 Patentblatt 1998/19**

(73) Patentinhaber: **SIEMENS AKTIENGESELLSCHAFT**
**80333 München (DE)**

(72) Erfinder: **Künzel, Stefan, Dipl.-Ing.**
**91056 Erlangen (DE)**

(56) Entgegenhaltungen:

**WO-A-90/15472** **US-A- 5 479 081**

- **KIM S -H ET AL: "Voltage Control Strategy for maximum torque operation of an induction machine in the field weakening region" 5.September 1994 , PROCEEDINGS OF THE INTERNATIONAL CONFERENCE ON INDUSTRIAL ELECTRONIC CONTROL AND INSTRUMENTATION. (IECON), BOLOGNA, SEPT. 5 - 9, 1994 PLENARY SESSION POWER ELECTRONICS, VOL. 1 OF 3, PAGE(S) 599 - 604 , INSTITUTE OF ELECTRICAL AND ELECTRONICS ENGINEERS XP000528662**
- **SEIBEL B J ET AL: "FIELD ORIENTED CONTROL OF AN INDUCTION MACHINE WITH DC LINK AND LOAD DISTURBANCE REJECTION" 3.März 1996 , APEC '96. ELEVENTH ANNUAL APPLIED POWER ELECTRONICS CONFERENCE AND EXPOSITION, SAN JOSE, MAR. 3 - 7, 1996, VOL. 1, PAGE(S) 387 - 393 , INSTITUTE OF ELECTRICAL AND ELECTRONICS ENGINEERS XP000585679**
- **SANG-HOON KIM ET AL: "MAXIMUM TORQUE CONTROL OF AN INDUCTION MACHINE IN THE FIELD WEAKENING REGION" 1.Juli 1995 , IEEE TRANSACTIONS ON INDUSTRY APPLICATIONS, VOL. 31, NR. 4, PAGE(S) 787 - 794 XP000523939**
- **KIM J -M ET AL: "SPEED CONTROL OF INTERIOR PERMANENT MAGNET SYNCHRONOUS MOTOR DRIVE FOR FLUX WEAKENING OPERATION" 8.Oktober 1995 , RECORD OF THE INDUSTRY APPLICATIONS CONFERENCE (IAS), ORLANDO, OCT. 8 - 12, 1995, VOL. 1, PAGE(S) 216 - 221 , INSTITUTE OF ELECTRICAL AND ELECTRONICS ENGINEERS XP000550960**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 840 441 B1

## Beschreibung

Die Erfindung betrifft ein Verfahren sowie eine Regelungsstruktur zur feldorientierten Regelung einer Drehfeldmaschine an der Spannungsdecke.

Bei der hochwertigen Regelung einer Drehzahl, einer Lage oder eines Drehmomentes von asynchronen oder synchronen Drehfeldmaschinen haben sich Verfahren durchgesetzt, bei denen die Stromsollwerte in einem mit der Flußlage mitdrehenden Koordinatensysteme vorgegeben werden. Bei dieser als feldorientierte Regelung bezeichneten Vorgehensweise unterscheidet man dabei eine Stromkomponente in Flußrichtung, die feldbildende Komponente, welche auch D-Komponente genannt wird, und eine Komponente senkrecht zur Flußlage, die momentbildende Komponente, welche auch als Q-Komponente bezeichnet wird. Diese Stromsollwerte werden von unterlagerten Stromreglern durch eine geeignete Spannungsausgabe eingeprägt.

Die maximal verfügbare Ausgangsspannung ist im allgemeinen begrenzt. Deshalb können Schwierigkeiten auftreten, wenn die Stromregler nicht mehr realisierbare Spannungen anfordern. Dabei sind zwei verschiedene Reaktionen für die einzelnen Stromkomponenten denkbar:

1. Die Stromistwert-Komponente bleibt betragsmäßig kleiner als Stromsollwert-Komponente
2. Die Stromistwert-Komponente wächst auf betragsmäßige größere Werte als die Stromsollwert-Komponente an.

Da beide Stromsollwert-Komponenten Einfluß auf den Spannungsbedarf haben, kann es dazu kommen, daß ein Abweichen einer Stromkomponente aufgrund der Stellbegrenzung bzw. Spannungsbegrenzung erst recht zu einem erhöhten Spannungsbedarf führt, wodurch die Situation noch verschärft wird. Solange beide Stromkomponenten betragsmäßig kleiner als die Sollwerte sind, wird zwar meist nicht die maximal mögliche Motorleistung ausgeschöpft, es kann aber auch kein Schaden an der Maschine oder dem Leistungsteil auftreten.

Anders ist es jedoch, wenn mindestens eine der beiden Stromkomponenten den Sollwert betragsmäßig überschreitet. Dann droht ein Schaden am Motor und/oder dem Leistungsteil, welcher aufgrund der Stellbegrenzung vom Stromregler nicht verhindert werden kann. Darüber hinaus ist es möglich, daß der Motor in einen Betriebszustand gerät, in dem er auf veränderte Sollwerte nicht mehr reagiert.

Solche Probleme treten z.B. bei einem D/Q-Stromregelungsverfahren auf. Das Verhalten bei Erreichen der Stellbegrenzung ist ungünstig. Im motorischen Betrieb der Drehfeldmaschine bleibt die Motorleistung bei Spannungsbegrenzung häufig weit hinter dem maximal möglichen Wert zurück. Im generatorischen Betrieb hingegen wächst der Strom bei Erreichen der Spannungsdecke der Spannungsausgabe häufig auf ungewollt große Werte an, wobei ein Abbau des Drehmomentes dann zunächst gar nicht mehr möglich ist, wodurch der Antrieb seine Steuerbarkeit verliert. Erst im unteren Drehzahlbereich, in dem der Spannungsbedarf des Motors geringer ist, kann dieser ungünstige Betriebszustand wieder verlassen werden, nach dem er sich einmal eingestellt hat.

Herkömmlicherweise wird das Problem der Spannungsbegrenzung im D/Q-Verfahren durch eine geeignete Begrenzungskennlinie für die momentbildende Stromkomponente und durch Kennlinien für die feldbildende Stromkomponente verhindert. Um diese Kennlinie nicht zu kompliziert zu gestalten, sind sie in der Regel nur drehzahlabhängig und weisen abschnittsweise einfache Zusammenhänge auf. Dies sind beispielsweise konstante, indirekte oder proportionale Zusammenhänge zur Drehzahl oder zum Drehzahlquadrat. Bei einer digitalen Regelung hat die Drehzahlabhängigkeit den Vorteil, daß Änderungen vergleichsweise langsam erfolgen, wodurch eine Berechnung in einer langsamen Zeitscheibe (z.B. 1 mm/sec.-Zeitscheibe) ausreicht. Da sich der Spannungsbedarf jedoch lastabhängig ändert, muß man eine für die Last ausreichende Spannungsreserve belassen. Dies führt im oberen Drehzahlbereich (denn nur hier ist der Spannungsbereich bei Drehfeldmaschinen groß genug) bei einem Asynchronmotor zu einer relativ niedrigen Magnetisierung, die durch einen erhöhten momentbildenden Strom bei kleiner und mittlerer Belastung erkauft werden muß. Beim Synchronmotor führt dies zu einem erhöhten feldentgegenwirkenden Strom, der auch im Leerlauf aufgebracht wird. Trotzdem ist eine zusätzliche Spannungsreserve notwendig, um sicher zu verhindern, daß aufgrund der Motorstreuung oder Störungen die Spannungsbegrenzung erreicht wird. Dadurch bleibt die Motorleistung weit hinter dem maximal möglichen Wert zurück.

In der EP-0 474 629 ist ein Verfahren gezeigt, in dem die Probleme an der Spannungsdecke durch eine Stromregelung mit impliziter Feldschwächung mit Hilfe einer analogen Regelung behoben werden. Dieses Verfahren zur analogen Regelung, welches auch als FCS-Stromregelung für Asynchronmotoren bezeichnet wird, arbeitet ähnlich wie das D/Q-Verfahren, jedoch mit dem Unterschied, daß mit Größen geregelt wird, die im polaren Koordinatensystem vorliegen. Eine eventuelle Winkel- oder Amplitudenabweichung wird nach Betrag und Winkel ausgeregelt. In diesem Verfahren werden Stromsollwerte produziert, die mit Phasenstromreglern weiterverarbeitet werden, was jedoch den gravierenden Nachteil hoher Rechenzeiten besitzt. Auch ist bis heute nur eine Realisierung in Hardware möglich ist, da herkömmliche Signalprozessoren noch keine ausreichende Rechenkapazitit zur Verfügung stellen.

Da somit bei der FCS-Stromregelung für Asynchronmotoren im Bereich der Spannungsdecke eine implizite Veränderung beider Stromkomponenten erreicht wird, wird die Überstromproblematik entschärft und auch die Leistungsausbeute erhöht. Diese implizite Veränderung der Stromkomponenten führt jedoch nicht notwendigerweise zu einer zielgerichteten Maximierung der Motorleistung. Die FCS-Stromregelung ist außerdem nur für Asynchronmotoren einsetzbar, da sie bei kleinen Strömen problematisch ist.

Aus der Veröffentlichtung Kim, S-H et. al. "Voltage Control Strategy for maximum torque operation of an induction machine in the field weakening region", 05.09.94, S.599 bis 604, ist ein Steuerungsverfahren für Drehfeldmaschinen bei Feldschwäche bekannt, wobei lediglich als Asynchronmotoren ausgeprägte Drehfeldmaschinen betrachtet werden. Eine Betrachtung für Synchronmaschinen fehlt und auch Maßnahmen zur Stabilisierung des Arbeitspunktes bei der Regelung im Feldschwächebereich sind nicht offenbart.

Aufgabe der vorliegenden Erfindung ist es daher, ein Verfahren sowie eine Regelungsstruktur zu schaffen, welche einen Betrieb an der Spannungsdecke ermöglichen, ohne daß ein Überstrom und Verlust der Steuerbarkeit auftritt und zugleich die maximal mögliche Motorleistung ausgeschöpft wird. Diese Aufgabe soll für Synchronmaschinen gelöst werden und im Rahmen einer feldorientierten Regelung eingesetzt werden.

Gemäß der vorliegenden Erfindung wird diese Aufgabe durch ein Verfahren zur feldorientierten Regelung einer Synchronmaschine an der Spannungsdecke nach folgenden Verfahrensschritten gelöst:

1.1 eine feldbildende Stromkomponente wird in Flußrichtung über einen ersten Stromregler eingeprägt, von dem ausgangsseitig eine Spannungskomponente in Flußrichtung abgeleitet wird,
1.2 eine momentbildende Stromkomponente wird senkrecht zur Flußrichtung über einen zweiten Stromregler eingeprägt, von dem ausgangsseitig eine Spannungskomponente senkrecht zur Flußrichtung abgeleitet wird,
1.3 erreicht die Spannungskomponente in Flußrichtung einen ersten vorgegebenen Spannungsbegrenzungswert, so wird der Betrag der momentbildenden Stromkomponente verringert, 1.4 erreicht die Spannungskomponente senkrecht zur Flußrichtung einen zweiten vorgegebenen Spannungsbegrenzungswert, welcher dem ersten Spannungsbegrenzungswert entsprechen kann, so wird die feldbildende Stromkomponente verkleinert,
1.5 die feldbildende Stromkomponente wird so gewählt, daß sie folgendem Kriterium genügt:

$$i_d \geq -\frac{\psi}{L_\sigma}$$

mit

$\psi$: Betrag des Läuferflusses
$L_\sigma$: Ankerinduktivität.

1.6 durch eine Koordinatentransformation werden die das Drehfeld der Maschine auslösenden Spannungen entsprechend den begrenzten Spannungskomponenten erzeugt.

In einer ersten vorteilhaften Ausgestaltung des Verfahrens gemäß der vorliegenden Erfindung wird es ermöglicht, die von dem Spannungsmaximumsregler angeforderte Veränderung der feldbildenden Stromkomponenten in allen Betriebszuständen zu realisieren. Dies geschieht durch folgenden weiteren Verfahrensschritt:

2.1 soll die feldbildende Stromkomponente verkleinert werden und die Spannungskomponente in Flußrichtung ist bereits begrenzt, so wird über eine betragsmäßige Verringerung der momentbildenden Stromkomponente eine Spannungsreserve für die Spannungskomponente in Flußrichtung geschaffen.

In einer weiteren vorteilhaften Ausgestaltung des Verfahrens gemäß der vorliegenden Erfindung wird erreicht, daß die von dem Spannungsmaximumsregler angeforderte Veränderung der momentbildenden Stromkomponente in allen Betriebszuständen realisierbar ist. Dies geschieht durch den folgenden weiteren Verfahrensschritt:

3.1 soll der Betrag der momentbildenden Stromkomponente verringert werden und die Spannungskomponente senkrecht zur Flußrichtung ist bereits begrenzt, so wird über eine Verkleinerung der feldbildenden Stromkomponente eine Spannungsreserve für die Spannungskomponente senkrecht zur Flußrichtung geschaffen.

In einer weiteren vorteilhaften Ausgestaltung des Verfahrens gemäß der vorliegenden Erfindung wird die Leistungsfähigkeit der im vorangehenden dargestellten Maßnahmen durch folgenden weiteren Verfahrensschritt gesteigert:

4.1 eine Begrenzung der Spannungen in und senkrecht zur Flußrichtung erfolgt zusätzlich durch eine Vorsteuerung

mit Begrenzungskennlinien für die feldbildende und die momentbildende Stromkomponente, welche drehzahlabhängig und/oder lastabhängig sind.

In einer weiteren vorteilhafen Ausgestaltung des Verfahrens gemäß der vorliegenden Erfindung wird zusätzlich erreicht, daß die Motordatenstreuungen automatisch ausgeglichen werden. Dies geschieht durch folgende zusätzliche Verfahrensschritte:

5.1 eine Verringerung des Betrages der momentbildenden Stromkomponente erfolgt durch Ableiten einer Begrenzungskennlinie für die momentbildende Stromkomponente aus der Spannungskomponente in Flußrichtung,
5.2 eine Verkleinerung der feldbildenden Stromkomponente erfolgt durch Ableiten eines Sollwertes für die feldbildende Stromkomponente aus der Spannungskomponente senkrecht zur Flußrichtung.

In einer weiteren vorteilhaften Ausgestaltung des Verfahrens gemäß der vorliegenden Erfindung wird für den Einsatz von Synchronmotoren die bei Spannungsbegrenzung maximale Leistung weiter optimiert, was durch folgenden weiteren Verfahrensschritt geschieht:

6.1 mit zunehmender Größe der einzuprägenden momentbildenden Stromkomponente wird ein Spannungssollwert des Reglers zur Verkleinerung der feldbildenden Stromkomponente sukzessive bis maximal auf den Wert Null reduziert.

Um die im vorangehenden dargestellten Verfahrensschritte gemäß der vorliegenden Erfindung und damit erzielbaren Vorteile auf einfache effektive Art und Weise umsetzen zu können, wird desweiteren eine Regelungsstruktur zur feldorientierten Regelung einer Synchronmaschine an der Spannungsdecke mit den folgenden Elementen geschaffen:

7.1 es ist ein erster Stromregler zum Einprägen einer feldbildenden Stromkomponente in Flußrichtung vorgesehen, von dem ausgangsseitig eine Spannungskomponente in Flußrichtung ableitbar ist,
7.2 es ist ein zweiter Stromregler zum Einprägen einer momentbildenden Stromkomponente senkrecht zur Flußrichtung vorgesehen, von dem ausgangsseitig eine Spannungskomponente senkrecht zur Flußrichtung ableitbar ist,
7.3 es ist ein erster Spannungsmaximumregler vorgesehen, über den bei Erreichen einer ersten vorgegebenen Spannungsbegrenzung durch die Spannungskomponente in Flußrichtung der Betrag der momentbildenden Stromkomponente für den zweiten Stromregler verringerbar ist,
7.4 es ist ein zweiter Spannungsmaximumregler vorgesehen, über den bei Erreichen einer zweiten vorgegebenen Spannungsbegrenzung durch die Spannungskomponente senkrecht zur Flußrichtung die feldbildende Stromkomponente für den ersten Stromregler verkleinerbar ist, wobei
7.5 die feldbildende Stromkomponente so vorgebbar ist, daß sie folgendem Kriterium genügt:

$$i_d \geq -\frac{\psi}{L_\sigma}$$

mit

$\psi$: Betrag des Läuferflusses
$L_\sigma$: Ankerinduktivität.

7.6 es ist ein Mittel zur Koordinatentransformation vorgesehen, welches dem ersten und zweiten Stromregler nachgeschaltet ist und mit dem die das Drehfeld der Maschine auslösenden Spannungen entsprechend den begrenzten Spannungskomponenten erzeugbar und über ein Umrichtersystem in die Synchronmaschine einprägbar sind.

In einer ersten vorteilhaften Ausgestaltung der Regelungsstruktur gemäß der vorliegenden Erfindung werden besonders geeignete Spannungsmaximumregler eingesetzt. Dies geschieht durch folgendes weiteres Merkmal:

8.1 die beiden Spannungsmaximumregler sind als Regler mit integralem Verhalten ausgeprägt.

In einer weiteren vorteilhaften Ausgestaltung der Regelungsstruktur gemäß der vorliegenden Erfindung wird für den Einsatz von Synchronmotoren die maximale Leistung bei Spannungsbegrenzung weiter optimiert. Dies geschieht durch folgendes weiteres Merkmal:

9.1 es ist ein Mittel vorgesehen, mit welchem ein Spannungssollwert für den Spannungsmaximumregler zur Verkleinerung der feldbildenden Stromkomponente generierbar ist, wobei der Spannungssollwert mit zunehmender Größe der einzuprägenden momentbildenden Stromkomponente sukzessive bis maximal auf den Wert Null reduzierbar ist.

Weitere erfinderische Einzelheiten und Vorteile ergeben sich anhand der folgenden Schilderung von vorteilhaften Ausführungsbeispielen und in Verbindung mit den Figuren. Die Elemente der Darstellungen nach den Figuren sind, soweit sie übereinstimmen und die gleiche Funktionalität besitzen, mit denselben Bezugszeichen gekennzeichnet. Gleiche Elemente sind somit gattungsbildend mit denselben Bezugszeichen gekennzeichnet, gleiche Elemente stellen jedoch nicht zwangsläufig dieselben dar. Es zeigen im einzelnen:

FIG 1 eine Regelungsstruktur zur feldorientierten Regelung eines Asynchronmotors an der Spannungsdecke,
FIG 2 eine Regelungsstruktur zur feldorientierten Regelung einer Synchronmaschine an der Spannungsdecke,
FIG 3 beispielhafte Begrenzungskennlinien zur Vorsteuerung für Asynchronmotoren,
FIG 4 beispielhafte Begrenzungskennlinien zur Vorsteuerung für Synchronmotoren,
FIG 5 eine Regelungsstruktur zur feldorientierten Regelung einer Synchronmaschine an der Spannungsdecke mit zusätzlicher Möglichkeit zur Maximierung der Leistungsausbeute und
FIG 6 übergeordnete Regelungsstruktur zur feldorientierten Regelung einer Drehfeldmaschine am Beispiel eines D/Q-Verfahrens für eine Asynchronmaschine, in welche die in den Figuren 1, 2 und 5 gezeigten Regelungsstrukturen eingebunden werden können.

Der besseren Verständlichkeiten halber wird mit einer Schilderung der übergeordneten Regelungsstruktur gemäß der Darstellung nach FIG 6 begonnen. Diese zeigt eine Regelungsstruktur für ein D/Q-Stromregelungsverfahren zur feldorientierten Regelung einer Asynchronmaschine 5. Dazu wird eine Solldrehzahl n* vorgegeben, auf welche in einem Differenzglied 17 eine über einen Rotorlagegeber 7 der Asynchronmaschine 5 über eine Differentiation 18 ermittelte Istdrehzahl n negativ zurückgeführt wird. Mit dem Ausgangssignal des Differnzglieds 17 wird ein Drehzahlregler 10 beaufschlagt, dessen Ausgangssignal über eine Begrenzungskennlinie 11 eine momentbildende Stromsollwert-Komponente, die q-Komponente $i_q^*$ bereitstellt. Zur Generierung einer feldbildenden Stromsollwert-Komponente wird in einem Flußmodell 8 ein Schätzwert $\hat{\Psi}$ abgeleitet. Dieser wird zum einen zum Drehzahlregler 10 geführt. Zum anderen wird der Schätzwert $\hat{\Psi}$ über ein Differenzglied 16 negativ auf einen aus der Istdrehzahl über eine Feldschwächungskennlinie 9 abgeleiteten Sollwert $\hat{\Psi}^*$ negativ aufgeschaltet. Mit dem Ausgangssignal des Differenzglieds 16 ist ein Flußregler 12 beaufschlagt, dessen Ausgang über eine Begrenzungskennlinie 13 eine feldbildende Stromkomponente, die d-Komponente $i_d^*$ bereitstellt.

Die Stromsollwert-Komponenten werden somit in einem mit der Flußlage mitdrehenden Koordinatensystem als feldbildende Komponente in Flußrichtung, die d-Komponente, sowie momentbildende Komponente senkrecht zur Flußlage, die q-Komponente, vorgegeben. Der Iststromraumzeiger der Strangströme $i_r$, $i_s$ und $i_t$ wird über eine Koordinaten- und 2/3-Transformation 6 ebenfalls in eine d- und q-Komponente des mit dem Fluß drehenden Koordinatensystems transformiert. Die so erhaltene momentbildende Istwertkomponente $i_q$ über ein Differenzglied 14 auf die momentbildende Stromsollwert-Komponente $i_q^*$ negativ aufgeschaltet. Ebenso wird die durch die Koordinatentransformation erhaltende feldbildende Istwertkomponente $\hat{I}_d$ über ein weiteres Differenzglied 15 negativ auf die feldbildende Stromsollwert-Komponente $i_d^*$ aufgeschaltet. Die Ausgangswerte der Differenzglieder 14 und 15 werden je einem Stromregler 1 bzw. 2 zugeführt, welche bevorzugterweise als PI-Regler ausgeprägt sind, die jede Komponente einprägen. Der Ausgang jedes Stromreglers 1 bzw. 2 stellt je eine Spannungskomponente $U^*_q$ bzw. $U^*_d$ im Flußkoordinatensystem bereit. Über diese wird der Spannungsraumzeiger festgelegt, der über eine weitere Koordinaten- und 2/3-Transformation 3 in das ständerfeste Koordinatensystem transformiert und in Form der Strangspannungen $U^*_r$, $U^*_s$ und $U^*_t$ über ein Umrichtersystem 4 an die Asynchronmaschine 5 ausgegeben wird. Das Flußmodell 8 wird neben anderen Parametern beispielhaft über einen mit Hilfe des Gebers 7 gewonnenen Rotorlagewert und einen an der Ständerwicklung ermittelten Ständertemperaturwert T berechnet. Es stellt neben dem Schätzwert $\hat{\Psi}$ einen Transformationswinkel $\varepsilon_{trans}$ bereit, welcher für die Durchführung der Koordinatentransformation 3 und 6 benötigt wird.

Der Vorteil dieses Verfahrens besteht darin, daß die zu regelnden Größen im stationären Zustand konstant sind. Dadurch kann der Strom stationär exakt nach Betrag und Winkel eingeprägt werden. Außerdem sind die Differenzialgleichungen der zu regelnden Strecke recht einfach ausgestaltet, da sie aus einem linearen PT1-Therm und einem nichtlinearen Therm bestehen, welcher aufschaltbar und damit kompensierbar ist.

Eingangs wurde dargestellt, daß der Betrieb der in der Darstellung gemäß FIG 6 gezeigten Regelungsstruktur an der Spannungsdecke im wesentlichen zwei Probleme aufwirft. Zum einen droht ein Überstrom und somit ein Verlust der Steuerbarkeit der Drehfeldmaschine, zum anderen wird die maximal mögliche Motorleistung nicht ausgeschöpft.

Beide Probleme werden durch die vorliegende Erfindung gelöst, wobei eine weitgehend Robustheit gegen Motordatenungenauigkeiten erzielt werden kann. Die im folgenden geschilderten Verfahrensschritte bzw. Strukturelemente gemäß der vorliegenden Erfindung sind sowohl für den Einsatz von Asynchronmaschinen als auch für Synchronmaschinen geeignet und lassen sich in der in der Darstellung gemäß FIG 6 gezeigten Regelungsstruktur zur d/q-Regelung auch mit beliebigen anderen feldorientierten Regelungsverfahren realisieren, in denen die Stromkomponenten bezüglich des Flusses vorgegeben und von einem Stromregler realisiert werden. Der Einfachheit halber sollen die folgenden Erläuterungen anhand der in der Darstellung gemäß FIG 6 gezeigten d/q-Stromregler 1 und 2 erfolgen. Es sind jedoch auch andere Stromregler denkbar. Außerdem wird die Betrachtung im folgenden für eine Läuferflußorientierung durchgeführt. Sie kann aber in ähnlicher Weise auch für eine Hauptfluß- oder Ständerflußorientierung erfolgen, da ein Fachmann hierfür lediglich allseits bekannter mathematischer Umformungen bedarf.

Unter einigen vereinfachenden Annahmen gelten für eine feldorientierte Regelung von Synchron- und Asynchronmotoren folgende Gleichungen im Läuferflußkoordinatensystem:

$$U_d = R \cdot i_d + L_\sigma \cdot \frac{di_d}{dt} - \omega \cdot L_\sigma \cdot i_q + \frac{d\Psi}{dt} \qquad (1)$$

$$U_d = R \cdot i_d + L_\sigma \cdot \frac{di_q}{dt} + \omega \cdot L_\sigma \cdot i_d + \omega \cdot \Psi \qquad (2)$$

$$M = \frac{3}{2} Z_p \cdot \Psi \cdot i_q \qquad (3)$$

$$\text{Synchronmotor: } \Psi \approx \text{const.} \qquad (4)$$

$$\text{Asynchronmotor: } \frac{L_R}{R_R} \cdot \frac{d\Psi}{dt} + \Psi = i_d \cdot \frac{L_h^2}{L_R} \qquad (5)$$

Dabei bedeuten:

$U_d$: Spannungskomponente in Flußrichtung
$U_q$: Spannungskomponente senkrecht zur Flußrichtung
$i_d$: Stromkomponente in Flußrichtung = feldbildender Strom
$i_q$: Stromkomponente senkrecht zur Flußrichtung = momentbildender Strom
R: Ankerwiderstand (Synchronmotor), Ständerwiderstand (Asynchronmotor)
$L_\sigma$: Ankerinduktivität (Synchronmotor), Ersatzstreuinduktivität (Asynchronmotor),
$\omega$: Kreisfrequenz, mit der sich das Läuferfeld dreht,
$\Psi$: Betrag des Läuferflusses (Synchronmotor), Betrag des Läuferlusses $*L_h/L_R$ (Asynchronmotor)

- $L_h$: Hauptfeldinduktivität
- $L_R$: Läuferinduktivität
- $L_S$: Ständerindukdivität

M: Motordrehmoment
$Z_p$: Polpaarzahl
$R_R$: Läuferwiderstand (nur Asynchronmotor)

Den Einfluß des Ständer-/Ankerwiderstandes kann man im Spannungsdeckenbereich mit guter Näherung vernachlässigen. Außerdem soll der stationäre Zustand betrachtet werden. Damit vereinfachen sich die Gleichungen wie folgt:

$$U_d = -\omega \cdot L_\sigma \cdot i_q \qquad (6)$$

$$U_q = \omega \cdot L_\sigma \cdot i_d + \omega \cdot \Psi \quad (7)$$

$$M = \frac{3}{2} Z_p \cdot \Psi \cdot i_q$$

Synchronmotor: $\Psi \approx$ const.

$$\text{Asynchronmotor: } \Psi = i_d \cdot \frac{L_h^2}{L_R} \quad (8)$$

$$\rightarrow U_q = \omega \cdot \left( L_\sigma + \frac{L_h^2}{L_R} \right) \cdot i_d = \omega \cdot L_s \cdot i_d \quad (9)$$

Anhand der Berechnungsvorschrift 6 läßt sich erkennen, daß die Spannungskomponente $U_d$ in Flußrichtung im wesentlichen von der momentbildenden Stromkomponente $i_q$ beeinflußt wird. Die Spannungskomponente $U_q$ senkrecht zur Flußrichtung hingegen wird, wie anhand der Berechnungsvorschrift 7 erkennbar, von der feldbildenden Stromkomponente $i_d$ und dem Betrag des Läuferflusses $\Psi$ beeinflußt. Beim Synchronmotor wird die Spannungskomponente $U_q$ senkrecht zur Flußrichtung im wesentlichen von der feldbildenden Stromkomponente $i_d$ und dem Fluß $\Psi$ sowie der Frequenz $\omega$ beeinflußt. Da beim Asynchronmotor der Betrag des Läuferflusses $\Psi$ ebenfalls von der feldbildenden Stromkomponente $i_d$ abhängt, was anhand der Berechnungsvorschriften 5 und 8 erkennbar ist, wird hier die Spannungskomponente $U_q$ senkrecht zur Flußrichtung stationär von der feldbildenden Stromkomponente $i_d$ und der Frequenz $\omega$ bestimmt.

Gelangt also die Spannungskomponente $U_d$ in Flußrichtung an die Spannungsbegrenzung, welche beispielsweise die maximal verfügbare Ausgangsspannung darstellt, so kann durch ein betragsmäßiges Verringern der momentenbildenden Stromkomponente $i_q$ senkrecht zur Flußrichtung wieder eine Spannungsreserve geschaffen werden. Wichtig ist, daß lediglich der Betrag der Stromkomponente $i_q$ verringert wird.

Ähnliches gilt, falls die Stromkomponente $U_q$ senkrecht zur Flußrichtung die Spannungsbegrenzung erreicht. Ein Verkleinern der feldbildenden Stromkomponente $i_d$ sorgt ebenfalls für ein Lösen von der Spannungsbegrenzung. Für den Fall einer Synchronmaschine bedeutet dies, daß der bereits negative Wert von $i_d$ weiter in den negativen Bereich verkleinert wird, also einen noch negativeren Wert annimmt.

Beides gilt auch dynamisch für die nicht vereinfachten Berechnungsvorschriften 1 bis 5. Hinzu kommt, daß eine Spannungsreserve sofort geschaffen wird, sobald - wie beschrieben - die feldbildende Stromkomponente $i_d$ verkleinert oder die momentbildende Stromkomponente $i_q$ betragsmäßig verringert wird. Dies geschieht somit nicht etwa erst nach einem Flußabbau, was in der Regel eine unerwünscht lange Zeit beansprucht.

Jedoch muß bei der im vorangehenden dargestellten Verfahrensweise gemäß der vorliegenden Erfindung dafür Sorge getragen werden, daß ein betragsgemäßes Verringern der feldbildenden bzw. momentbildenden Stromkomponenten $i_d$ bzw. $i_q$ nicht in einem solchen Ausmaß geschieht, daß letztendlich kein Motormoment mehr aufgebaut werden kann. Wird nämlich bei einem Asynchronmotor die feldbildende Stromkomponente $i_d = 0$ stationär vorgegeben, so wird der Fluß $\Psi$ ebenfalls verschwinden und es kann somit kein Motormoment mehr aufgebaut werden. Unter Zugrundelegung der bezüglich des stationären Zustandes vereinfachten Berechnungsvorschriften 6 bis 9 läßt sich jedoch herleiten, daß das Motormoment beim Asynchronmotor dann maximal wird, wenn die Spannungskomponente $U_d$ in Flußrichtung und die Spannungskomponente $U_q$ senkrecht zur Flußrichtung vom Betrag gleich groß sind. Dies bedeutet, daß für die feldbildende Stromkomponente $i_d$ im Falle der Anwendung eines Asynchronmotors stationär folgendes Kriterium erfüllt sein muß:

$$i_d \geq \frac{U_{max}}{\omega \cdot L_s \cdot \sqrt{2}} \quad (10)$$

$U_{max}$: maximale Ausgangsspannung (Strangwert)

In ähnlicher Weise ergibt sich für den Einsatz einer Synchronmaschine folgendes Kriterium, welches erfüllt

werden muß, damit das Motormoment maximal wird:

$$i_d \geq -\frac{\Psi}{L_\sigma} \quad (11)$$

Andernfalls würde beim Einsatz eines Synchronmotors die Spannungskomponente $U_q$ senkrecht zur Flußrichtung ihr Vorzeichen wechseln und damit der Gesamtspannungsbedarf wieder steigen, so daß wiederum ein unerwünschtes Erreichen der Spannungsbegrenzung die Folge wäre. Damit wäre somit nichts gewonnen, im Gegenteil: auch der Strombedarf würde steigen. Aus diesem Grund muß das Kriterium gemäß der Berechnungsvorschrift 11 beim Einsatz von Synchronmaschinen beachtet werden.

In der Darstellung gemäß FIG 1 ist eine Regelungsstruktur zur feldorientierten Regelung einer Asynchronmaschine gezeigt, welche wie im vorangehenden beschrieben, einen Betrieb an der Spannungsdecke gemäß der vorliegenden Erfindung ermöglicht. Hierfür sind zwei zusätzliche Spannungsmaximumsregler 23 und 24 vorgesehen. Die Spannungskomponente $U_d$* in Flußrichtung wird vom Ausgang des Stromreglers 1 der feldbildenden Stromkomponente $i_d$ durch Aufschaltung 19 einer Größe gemäß der Berechnungsschrift 6 erzeugt. Dieser Wert $U*_d$ wird über ein Betragsglied 35 geführt, wo der Betrag von $|U_d*|$ gebildet wird. Diese Werte $|U_d*|$ werden über ein Differenzglied vom Sollwert, dem Spannungsbegrenzungswert $U_{dmax}$, abgezogen und der Ausgangswert des Differenzgliedes 21 dem Spannungsmaximumsregler 23 zugeführt. Das Ausgangssignal des Spannungsmaximumsregler 23 wird über eine Begrenzungskennlinie 25 auf zulässige negative Differenzwerte $\Delta i_q$* zur Regelung der momentbildenden Stromkomponente begrenzt. Im vorliegenden Ausführungsbeispiel sind die Spannungsmaximumregler 23 und 24 als Regler mit integralem Verhalten ausgestaltet. Vorteilhafterweise erfolgt daher eine Steuerung des I-Anteils des Spannungsmaximumsreglers 23 über die Begrenzungskennlinie 25.

Die Werte der Spannungskomponente $U_q$* werden vom Ausgang des anderen Stromreglers 2 für die momentbildende Stromkomponente $i_q$ durch Aufschaltung 20 einer Größe gemäß der Berechnungsvorschrift 7 ermittelt. Dieser Wert $U_q$* wird über ein Betragsglied 36 gefürht, wo der Betrag von $|U_q*|$ gebildet wird. Diese Werte $|U_q*|$ werden über ein Differenzglied 22 negativ auf einen Spannungsbegrenzungssollwert $U_{qmax}$ aufgeschaltet. Das Ausgangssignal des Differenzglieds 22 wird dem anderen Spannungsmaximumregler 24 zugeleitet. Dessen Ausgangssignal wird ebenfalls über eine Begrenzungskennlinie 26 geführt, welche das Kriterium gemäß der Berechnungsvorschrift 10 berücksichtigt. Am Ausgang der Begrenzungskennlinie 26 steht somit ein Zusatzsollwert $\Delta\Psi$* an, der die feldbildende Stromkomponente $i_d$ beeinflußt. Es erfolgt ebenfalls eine Steuerung des I-Anteils des Spannungsmaximumsreglers 24 über die Begrenzungskennlinie 26. Die übrigen in der Darstellung gemäß FIG 1 gezeigten Elemente entsprechen den bereits im vorangehenden anläßlich der Darstellung gemäß FIG 6 geschilderten Elementen.

Die über die beiden Spannungsmaximumsregler 23 und 24 an den Ausgängen der Begrenzungskennlinie 25 bzw. 26 anstehenden Differenzwerte $\Delta\Psi$* bzw. $\Delta i_q$* werden in der Praxis wie im folgenden geschildert aufgeschaltet. Die Differenzwerte der momentbildenden Stromkomponente $\Delta i_q$* verringern betragsmäßig die Grenzen der Begrenzungskennlinie 11 für die momentbildende Stromsollwertkomponente $i_q$*.

Durch einen Probehochlauf an der Momentengrenze können Kennlinien für die Kennlinienglieder 9 und 11 identifiziert werden, indem als Kennlinie die Begrenzung nach der Korrektur $+/-(i_{qmax}+\Delta i_q)$ bzw. der Flußsollwert nach der Korrektur $\Psi*+\Delta\Psi*$ (drehzahlabhängig) abgelegt werden. Dabei empfiehlt es sich, in zwei Schritten vorzugehen. Um die Kennlinie 11 zur Begrenzung des momentbildenden Stromes aufzuzeichnen, muß die Momentengrenze auf den maximal möglichen Wert gestellt werden. Die Flußsollwertkennlinie bzw. die $i_d$*-Kennlinie 9 sollte nur dann mit der maximal möglichen Momentengrenze aufgezeichnet werden, wenn das maximal mögliche Moment dynamisch sehr schnell aufgebaut werden soll. Ansonsten sollte man die Kennlinie 9 identifizieren, indem das Motormoment auf kleinere Werte, z.B. das Nennmoment begrenzt wird. Dies besitzt den Vorteil, daß bei einem kleineren Motormoment beim Asynchronmotor der Läuferstrom und beim Synchronmotor der Ständerstrom kleiner ist, verglichen mit dem Fall, daß die Kennlinie mit dem Maximalmoment aufgezeichnet wurde. Dadurch wird eine thermische Entlastung des Motors erreicht, sofern nicht das Maximalmoment erbracht werden muß. Das Maximalmoment kann aber auch erbracht werden, dadurch, daß der Spannungsmaximumsregler 24 die Feldstromvorgabe bei Bedarf entsprechend korrigiert (was dynamisch etwas länger dauert).

Diese im vorangehenden geschilderte Vorgehensweise zum betragsmäßigen Verringern der momentbildenden bzw. Verkleinern der feldbindenden Stromkomponenten $i_q$ bzw. $i_d$ besitzen den Vorteil, daß Motordatenstreuungen automatisch ausgeglichen werden. Außerdem werden Verklemmungen, welche zum Verlust der Steuerbarkeit führen, sicher gelöst.

In der Darstellung gemäß FIG 2 ist eine Regelungsstruktur zur feldorientierten Regelung einer Synchronmaschine gezeigt, welche einen Betrieb an der Spannungsdecke gemäß der vorliegenden Erfindung ermöglicht. Die Darstellung stimmt im wesentlichen mit der Darstellung gemäß FIG 1 überein, Unterschiede ergeben sich lediglich aufgrund der Verwendung einer Synchronmaschine. Dies hat zur Folge, daß auf das Differenzglied 16, den Flußregler

12 und die Begrenzungskennlinie 13 im feldbildenden Zweig verzichtet wird. Aus diesem Grund werden über das Aufschaltglied 27 direkt Differenzwerte $\Delta i_d^*$ für die feldbildende Sollwertstromkomponente $i_d$ aufgeschaltet. Die hierfür eingesetzte Begrenzungskennlinie 26 ist so konzipiert, daß sie das Kriterium für Synchronmaschinen entsprechend der Berechnungsvorschrift 11 berücksichtigt.

Neben dem im vorangehenden geschilderten Eingriff über die Spannungsmaximumsregler 23 und 24 empfiehlt sich auch eine Kombination mit den herkömmlichen Begrenzungskennlinien für die momentbildende Stromkomponente $i_q$ und den Kennlinien für die feldbildende Stromkomponente $i_d$. Diese zusätzliche Vorsteuerung durch Begrenzungskennlinien bringt im dynamischen Verhalten Vorteile mit sich. Wie eingangs erwähnt, werden solche Begrenzungskennlinien meist nur drehzahlabhängig ausgestaltet und weisen abschnittsweise einfache Zusammenhänge wie konstant, indirekt oder proportional zu Drehzahl oder zum Drehzahlquadrat auf. Eine zusätzliche Anpassung der Kennlinien bei Belastung ist möglich.

In der Darstellung gemäß FIG 3 sind sinnvolle Beispiele für Begrenzungskennlinien sowie den dazugehörigen Spannungsbedarf für eine Asynchronmaschine gezeigt. Im oberen der drei untereinander angeordneten Koordinatensysteme ist der Verlauf des Flußsollwertes $\psi^*$ über die Drehzahl n aufgetragen. Der Verlauf ist bis zur Drehzahl $n_{FS}$ der Feldschwächung konstant, anschließend umgekehrt proportional zur Drehzahl. Im mittleren Koordinatensystem ist eine Drehmomentbegrenzungskennlinie für Asynchronmotoren gezeigt, wobei die Drehmomentbegrenzung ebenfalls über die Drehzahl n aufgetragen ist. Bis zum Erreichen der Nenndrehzahl $n_N$ ist der Verlauf konstant, anschließend ebenfalls umgekehrt proportional zur Drehzahl. Mit Erreichen der Kippdrehzahl $n_{Kipp}$ erfolgt der Verlauf umgekehrt proportional zum Drehzahlquadrat. Im unteren Koordinatensystem ist der Spannungsbedarf des Asynchronmotors unter Verwendung der beiden obigen Kennlinien gezeigt, wobei der Spannungsbedarf ebenfalls über die Drehzahl n aufgetragen ist. Die durchgängige Linie zeigt den Verlauf des Spannungsbedarfes im motorischen Betrieb, die strichpunktierte Linie im generatorischen Betrieb und die gestrichelt gezeichnete Kennlinie den Verlauf im Leerlauf. Als Maximalwert ist die maximale Strangspannung $U_{max}$ auf der Ordinate aufgetragen.

In der Darstellung gemäß FIG 4 sind Beispiele für die entsprechenden Kennlinien für eine Synchronmaschine gezeigt. Im oberen Koordinatensystem ist der Feldstromsollwert $i_d^*$ über die Drehzahl n aufgetragen. Bis zum Erreichen der Drehzahl der Feldschwächung $n_{FS}$ ist der Verlauf der feldbildenden Stromkomponente konstant Null, anschließend umgekehrt proportional zur Drehzahlum $-I_o$ verschoben. Im mittleren gezeigten Koordinatensystem ist eine Drehmomentbegrenzungskennlinie für Synchronmotoren gezeigt, wobei die Drehmomentbegrenzung ebenfalls über die Drehzahl n aufgetragen ist. Der Verlauf ist bis zum Erreichen der Kippdrehzahl $n_{kipp}$ konstant, anschließend ebenfalls umgekehrt proportional zur Drehzahl. Im unteren Koordinatensystem ist der Spannungsbedarf des Synchronmotors unter Verwendung der bereits beschriebenen Kennlinien gezeigt. Der Spannungsbedarf ist ebenfalls über die Drehzahl n aufgetragen. Der durchgängige Verlauf zeigt dabei den Spannungsbedarf beim motorischen Betrieb, der strichpunktierte Verlauf den Spannungsbedarf beim generatorischen Betrieb. Der gestrichelte Verlauf zeigt den Spannungsbedarf im Leerlauf.

Um zu zeigen, daß eine über den Spannungsmaximumsregler 23 bzw. 24 angeforderte Verstellung der Stromsollwertkomponenten $i_d$ bzw. $i_q$ in den kritischen Betriebspunkten jederzeit realisierbar ist, sollen im folgenden die einzelnen Betriebsstände analysiert werden. Ohne Beschränkung der Allgemeinheit wird die Drehzahl positiv gewählt, womit gilt: $\omega \geq 0$. Mit den obigen Bedingungen für die feldbildende Stromkomponente $i_d$ gilt damit für die Stromkomponente $U_q$ senkrecht zur Flußrichtung: $U_q > 0$. Für den Betrieb an der Spannungsdecke sind die nicht vereinfachten Berechnungsvorschriften 1 bis 5 zu betrachten, denn es ist zu zeigen, daß eine Änderung des Stromes d i/dt in der gewünschten Richtung noch möglich ist.

Es folgt zunächst eine Darlegung für den motorischen Betrieb: $i_q \geq 0$. Hierbei gilt stationär: $U_d \leq 0$.

Bei einer Spannungsbegrenzung der Spannungskomponente $U_d$ in Flußrichtung soll die momentbildende Stromkomponente $i_q$ betragsmäßig verringert werden. Da, wie im vorangehenden erwähnt, die Spannungskomponente $U_q$ senkrecht zur Flußrichtung größer Null ist und immer - notfalls auf negative Werte - verkleinert werden kann, ist dies immer möglich. Bei einer Spannungsbegrenzung der Spannungskomponente $U_q$ senkrecht zur Flußrichtung soll die feldbildende Stromkomponente $i_d$ verkleinert werden. Dies ist möglich, wenn die Spannungskomponente $U_d$ in Flußrichtung nicht begrenzt ist, ansonsten wird über eine Verkleinerung von der momentbildende Stromkomponente $i_q$ eine Spannungsreserve von der Spannungskomponente $U_d$ in Flußrichtung geschaffen, was immer möglich ist. Damit kann die feldbildende Stromkomponente $i_d$ wieder verkleinert werden.

Für den generatorischen Betrieb gilt:

$$i_q \leq 0.$$

Hierbei gilt stationär: $U_d \geq 0$.

Bei einer Spannungsbegrenzung der Spannungskomponente $U_q$ senkrecht zur Flußrichtung soll die feldbildende Stromkomponente $i_d$ verkleinert werden. Da die Spannungskomponente $U_d$ in Flußrichtung größer gleich Null

ist und immer - notfalls auf negative Werte - verkleinert werden kann, ist dies immer möglich. Bei einer Spannungsbegrenzung der Spannungskomponente $U_d$ in Flußrichtung soll die momentbildende Stromkomponente $i_q$ betragsmäßig verkleinert - also erhöht - werden. Dies ist dann möglich, wenn die Spannungskomponente $U_q$ senkrecht zur Flußrichtung nicht begrenzt ist, ansonsten wird über eine Verkleinerung der feldbildenden Stromkomponente $i_d$ eine Spannungsreserve über die Spannungskomponente $U_q$ senkrecht zur Flußrichtung geschaffen (was immer möglich ist), damit die momentbildende Stromkomponente $i_q$ verkleinert werden kann.

Mit den vorangehenden Betrachtungen ist gezeigt, daß die von den Spannungsmaximumsreglern 23 und 24 angeforderten Veränderungen der Stromkomponenten $i_d$ bzw. $i_q$ in allen Betriebszuständen realisierbar sind.

Im folgenden soll desweiteren gezeigt werden, daß die Leistungsabgabe durch die Maßnahmen gemäß der vorliegenden Erfindung vergrößert wird.

Im Rahmen der Betrachtung für den Asynchronmotor wurde bereits erwähnt, daß die maximale Leistung dann abgegeben wird, wenn die Berechnungsvorschrift 10 erfüllt ist. Da die feldbildende Stromkomponente $i_d$ auf Werte begrenzt wird, die größer oder gleich diesem Wert sind, wird die Leistungsausbeute dann maximal, wenn dieser Wert erreicht wird und zugleich der maximale momentbildende Strom fließt. Dieser Wert wird dann erreicht, wenn der maximale momentbildende Strom $i_q$ angefordert wird. Dann nämlich steigt der Spannungsbedarf der Spannungskomponente $U_d$ in Flußrichtung vom Betrag bis die Begrenzung erreicht wird und die feldbildende Stromkomponente $i_d$ bis auf den optimalen Wert reduziert wird. Eine weitere Reduktion wird unterdrückt. Vorausgesetzt ist, daß über die Begrenzungskennlinie 11 entsprechend große Werte des momentbildenden Stromes $i_q$ auch zugelassen werden. Weniger Leistung kann selbstverständlich jederzeit angefordert werden.

Beim Synchronmotor wird die bei Spannungsbegrenzung maximale Leistung dann erreicht, wenn die Spannungskomponente $U_q$ senkrecht zur Flußrichtung Null wird. Dann steht nämlich die gesamte Spannung für den Spannungsabfall aufgrund des momentbildenden Stromes $i_q$ zur Verfügung. Mit der in der Darstellung gemäß FIG 1 gezeigten Regelungsstruktur wird dies allerdings nicht vollständig erreicht. Die Spannungsmaximumsregler 23 bzw. 24 begnügen sich bei maximal angeforderter Leistung damit, die Spannungskomponente $U_d$ in Flußrichtung und die Spannungskomponente $U_q$ senkrecht zur Flußrichtung beide an der Begrenzung zu halten. Damit wird zwar mehr erreicht als ohne diese Maßnahme, die so erzeugte Maximalleistung liegt allerdings um den Faktor $\sqrt{2}$ unterhalb der theoretisch möglichen Maximalleistung.

In der Darstellung gemäß FIG 2 ist die in der Darstellung gemäß FIG 1 gezeigte Regelungsstruktur zur feldorientierten Regelung von Synchronmaschinen an der Spannungsdecke um Abhilfemaßnahmen bzgl. der im vorangehenden dargestellten Problematik erweitert. Veränderungen ergeben sich zum einen durch die Berücksichtigung eines variablen Sollwertes $U_{qSpgmax}$ für den Spannungsmaximumregler 24 anstelle eines fest vorgegebenen Sollwertes $U_{qmax}$. Für den Fall, daß ein großes Drehmoment $M_{wunsch}$ angefordert wird, wird nach Durchlaufen einer entsprechenden Begrenzungskennlinie 31 ein entsprechend großer momentbildender Strom $i_{qwunsch}$ angefordert, welcher eingangsseitig an die Begrenzungskennlinie 11 geführt wird. Aus diesem angeforderten momentbildenden Strom $i_{qwunsch}$ wird der Sollwert $U_{qSpgmax}$ über ein entsprechendes Funktionsglied 30 abgeleitet. Dies geschieht folgendermaßen, indem der Sollwert des Spannungsmaximumreglers 24 von $U_{qmax}$ gegen kleinere Werte - maximal gegen Null - reduziert wird. Dies kann beispielsweise anhand folgender Berechnungsvorschrift geschehen

$$U_{qSpgmax} = \mathrm{MINIMUM}\left(U_{q\max}, \sqrt{(U_{\max})^2 - (\omega L_\sigma i_{qwunsch})^2}\right) \qquad (12)$$

Damit wird die feldbildende Stromkomponente $i_d$ weiter verkleinert, wodurch die Spannungskomponente $U_q$ senkrecht zur Flußrichtung gegen Null geht und wie bereits erwähnt die maximale Leistung erreicht werden kann. Verringert man den Sollwert beispielsweise lediglich bis $0{,}2 \cdot U_{qmax}$, so verliert man nur 2 % gegenüber der theoretisch maximal möglichen Leistung. Auf diese Weise hat man die maximal mögliche Leistung zur Verfügung, im Leerlauf und bei kleiner Last kommt man jedoch mit einem minimalen Strom aus. Wird hingegen nicht der maximale momentbildende Strom $i_q$ angefordert, so unterbleibt diese Maßnahme, denn sie muß mit einem erhöhten Strom bezahlt werden. Damit wird auch unter anderen Randbedingungen (z.B. einer Strombegrenzung) die maximal mögliche Leistung erbracht.

Desweiteren ist in der Darstellung gemäß FIG 5 eine alternative Maßnahme zur Ansteuerung des Spannungsmaximumsreglers 23 gezeigt. Die am Ausgang des Aufschaltungsgliedes 19 anstehende Spannungskomponente $U_d$ in Flußrichtung wird über eine Begrenzungskennlinie 28 so begrenzt, daß der Spannungsbegrenzungswert $U_{dmax}$ nicht erreicht wird. Aus diesem Grund wird dem Differenzglied 21 auch nicht der ursprüngliche Sollwert $U_{dmax}$ aufgeschaltet, weil dieser sonst gar nicht erreicht werden könnte, sondern lediglich ein geringerer Wert von beispielsweise $0{,}9 \times U_{dmax}$.

In den Beispielen in FIG 1 und FIG 2 werden die beiden Spannungskomponenten getrennt begrenzt. Die Amplitude U der resultierenden Spannung entsteht jedoch aus beiden Komponenten nach der Formel:

$$U = \sqrt{U_d^2 + U_q^2}$$

Soll diese Spannungsamplitude einen vorgegebenen Maximalwert nicht überschreiten, so kann die Begrenzung der Spannungskomponenten zunächst nicht unabhängig voneinander erfolgen. Wird allerdings der Wert der einzelnen Phasenspannungen $U_r$, $U_s$ und $U_t$ betragsmäßig auf den möglichen Maximalwert $U_{max}$ begrenzt und die Begrenzung der Spannungskomponenten ist (betragsmäßig) größer oder gleich diesem Maximalwert $U_{max}$, so kann die Spannungsamplitude vor der Begrenzung U (betragsmäßig) größer als $U_{max}$ werden. Die Phasenspannungen zeigen dann einen sinusförmigen Verlauf., bei dem Werte betragsmäßig größer als $U_{max}$ abgeschnitten werden. Damit wird die reine Sinusform der Spannungen verlassen. Die entstehende harmonische Grundwelle hat jedoch eine größere Amplitude als $U_{max}$ (jedoch kleiner als U), so daß damit eine größere Spannungsauslastung möglich ist. Außerdem ist dann auch eine getrennte Begrenzung der einzelnen Spannungskomponenten möglich.

Die in den Darstellungen gemäß FIG 1, 2, 5 und 6 gezeigten Regelungsstrukturen sind beispielhaft aufbauend auf dem d/q-Verfahren gewählt. Selbstverständlich sind verschiedene Varianten der Ausführungen auch mit anderen Regelcharakteristika, Begrenzungen und einer anderen Sollwertvorgabe ebenfalls denkbar. Eine Realisierung der Regelungsstruktur kann sowohl in Hardware als auch in einer geeignet programmierten Software mit Hilfe eines Mikroprozessorsystemes erfolgen.

## Patentansprüche

1. Verfahren zur feldorientierten Regelung einer Synchronmaschine an der Spannungsdecke nach folgenden Verfahrensschritten:

   1.1 eine feldbildende Stromkomponente ($i_d$) wird in Flußrichtung über einen ersten Stromregler (1) eingeprägt, von dem ausgangsseitig eine Spannungskomponente ($U_d$) in Flußrichtung abgeleitet wird,
   1.2 eine momentbildende Stromkomponente ($i_q$) wird senkrecht zur Flußrichtung über einen zweiten Stromregler (2) eingeprägt, von dem ausgangsseitig eine Spannungskomponente ($U_q$) senkrecht zur Flußrichtung abgeleitet wird,
   1.3 erreicht die Spannungskomponente ($U_d$) in Flußrichtung einen ersten vorgegebenen Spannungsbegrenzungswert ($U_{dmax}$), so wird der Betrag der momentbildenden Stromkomponente ($i_q$) verringert,
   1.4 erreicht die Spannungskomponente ($U_q$) senkrecht zur Flußrichtung einen zweiten vorgegebenen Spannungsbegrenzungswert ($U_{qmax}$), welcher dem ersten Spannungsbegrenzungswert entsprechen kann, so wird die feldbildende Stromkomponente ($i_d$) verkleinert,
   1.5 die feldbildende Stromkomponente ($i_d$) wird so gewählt, daß sie folgendem Kriterium genügt:

   $$i_d \geq -\frac{\psi}{L^{\sigma}}$$

   mit

   $\psi$: Betrag des Läuferflusses
   $L_{\sigma}$: Ankerinduktivität.

   1.6 durch eine Koordinatentransformation (3) werden die das Drehfeld der Maschine auslösenden Spannungen ($U_r$,$U_s$,$U_t$) entsprechend den begrenzten Spannungskomponenten ($U_d$*, $U_q$*) erzeugt.

2. Verfahren nach Anspruch 1 mit folgendem weiteren Verfahrensschritt:

   2.1 soll die feldbildende Stromkomponente ($i_d$) verkleinert werden und die Spannungskomponente ($U_d$) in Flußrichtung ist bereits begrenzt, so wird über eine betragsmäßige Verringerung der momentbildenden Stromkomponente ($i_q$) eine Spannungsreserve für die Spannungskomponente ($U_d$) in Flußrichtung geschaffen.

3. Verfahren nach einem der vorangehenden Ansprüche mit folgendem weiteren Verfahrensschritt:

   3.1 soll der Betrag der momentbildenden Stromkomponente ($i_q$) verringert werden und die Spannungskomponente ($U_q$) senkrecht zur Flußrichtung ist bereits begrenzt, so wird über eine Verkleinerung der feldbildenden

Stromkomponente ($i_d$) eine Spannungsreserve für die Spannungskomponente ($U_q$) senkrecht zur Flußrichtung geschaffen.

**4.** Verfahren nach einem der vorangehenden Ansprüche mit folgendem weiteren Verfahrensschritt:

4.1 eine Begrenzung der Spannungen in ($U_d$) und senkrecht zur Flußrichtung ($U_q$) erfolgt zusätzlich durch eine Vorsteuerung mit Begrenzungskennlinien (11,13) für die feldbildende ($i_d$) und die momentbildende Stromkomponente ($i_q$), welche drehzahlabhängig und/oder lastabhängig sind.

**5.** Verfahren nach einem der vorangehenden Ansprüche mit folgenden weiteren Verfahrensschritten:

5.1 eine Verringerung des Betrages der momentbildenden Stromkomponente ($i_q$) erfolgt durch Ableiten einer Begrenzungskennlinie (11) für die momentbildende Stromkomponente ($i_q$) aus der Spannungskomponente ($U_d$) in Flußrichtung,
5.2 eine Verkleinerung der feldbildenden Stromkomponente ($i_d$) erfolgt durch Ableiten eines Sollwertes ($\Delta\psi^*$ bzw. $\Delta i_d^*$) für die feldbildende Stromkomponente ($i_d$) aus der Spannungskomponente ($U_q$) senkrecht zur Flußrichtung.

**6.** Verfahren nach einem der Ansprüche 1 bis 5 mit folgendem weiteren Verfahrensschritt:

6.1 mit zunehmender Größe der einzuprägenden momentbildenden Stromkomponente ($i_q$) wird ein Spannungssollwert ($U_{qspgmax}$) des Reglers (24) zur Verkleinerung der feldbildenden Stromkomponente ($i_d$) sukzessive bis maximal auf den Wert Null reduziert.

**7.** Regelungsstruktur zur Durchführung des Verfahrens nach Anspruch 1 zur feldorientierten Regelung einer Synchronmaschine an der Spannungsdecke mit folgenden Elementen:

7.1 es ist ein erster Stromregler (1) zum Einprägen einer feldbildenden Stromkomponente ($i_d$) in Flußrichtung vorgesehen, von dem ausgangsseitig eine Spannungskomponente ($U_d$) in Flußrichtung ableitbar ist,
7.2 es ist ein zweiter Stromregler (2) zum Einprägen einer momentbildenden Stromkomponente ($i_q$) senkrecht zur Flußrichtung vorgesehen, von dem ausgangsseitig eine Spannungskomponente ($U_q$) senkrecht zur Flußrichtung ableitbar ist,
7.3 es ist ein erster Spannungsmaximumregler (23) vorgesehen, über den bei Erreichen einer ersten vorgegebenen Spannungsbegrenzung ($U_{dmax}$) durch die Spannungskomponente ($U_d$) in Flußrichtung der Betrag der momentbildenden Stromkomponente ($i_q$) für den zweiten Stromregler (2) verringerbar ist,
7.4 es ist ein zweiter Spannungsmaximumregler (24) vorgesehen, über den bei Erreichen einer zweiten vorgegebenen Spannungsbegrenzung ($U_{qmax}$) durch die Spannungskomponente ($U_q$) senkrecht zur Flußrichtung die feldbildende Stromkomponente ($i_d$) für den ersten Stromregler (1) verkleinerbar ist, wobei
7.5 die feldbildende Stromkomponente ($i_d$) so vorgebbar ist, daß sie folgendem Kriterium genügt:

$$i_d \geq -\frac{\psi}{L_\sigma}$$

mit

$\psi$: Betrag des Läuferflusses
$L_\sigma$: Ankerinduktivität.

7.6 es ist ein Mittel zur Koordinatentransformation (3) vorgesehen, welches dem ersten (1) und zweiten (2) Stromregler nachgeschaltet ist und mit dem die das Drehfeld der Maschine auslösenden Spannungen ($U_r$,$U_s$, $U_t$) entsprechend den begrenzten Spannungskomponenten ($U_d^*$,$U_q^*$) erzeugbar und über ein Umrichtersystem (4) in die Synchronmaschine (5) einprägbar sind.

**8.** Regelungsstruktur nach Anspruch 7 mit folgendem weiteren Merkmal:

8.1 die beiden Spannungsmaximumregler (23, 24) sind als Regler mit integralem Verhalten ausgeprägt.

**9.** Regelungsstruktur nach Anspruch 7 oder 8 mit folgendem weiteren Merkmal:

9.1 es ist ein Mittel (30) vorgesehen, mit welchem ein Spannungssollwert ($U_{qSpgmax}$) für den Spannungsmaximumregler (24) zur Verkleinerung der feldbildenden Stromkomponente (id) generierbar ist, wobei der Spannungssollwert ($U_{qSpgmax}$) mit zunehmender Größe der einzuprägenden momentbildenden Stromkomponente ($i_q$) sukzessive bis maximal auf den Wert Null reduzierbar ist.

## Claims

**1.** A process for the field-oriented control of a synchronous machine at the voltage ceiling in accordance with the following process steps:

1.1 a field-forming current component ($i_d$) is impressed in the flux direction via a first current controller (1), from the output of which a voltage component ($U_d$) in the flux direction is derived,
1.2 a torque-forming current component ($i_q$) is impressed at right angles to the flux direction via a second current controller (2), from the output of which a voltage component ($U_q$) at right angles to the flux direction is derived,
1.3 if the voltage component ($U_d$) in the flux direction reaches a first preset voltage limit value ($U_{dmax}$), the absolute value of the torque-forming current component ($i_q$) is reduced,
1.4 if the voltage component ($U_q$) at right angles to the flux direction reaches a second preset voltage limit value ($U_{qmax}$), which can correspond to the first voltage limit value, the field-forming current component ($i_d$) is reduced,
1.5 the field-forming current component ($i_d$) is selected such that it fulfils the following criterion:

$$i_d \geq -\frac{\Psi}{L_\sigma}$$

where

$\Psi$: absolute value of the rotor flux
$L_\sigma$: armature inductance,

1.6 by means of a coordinate transformation (3) the voltages ($U_r$, $U_s$, $U_t$) which trigger the rotary field of the machine are generated in accordance with the limited voltage components ($U_d^*$, $U_q^*$).

**2.** A process according to Claim 1 comprising the following further process step:

2.1 if the field-forming current component ($i_d$) is to be reduced and the voltage component ($U_q$) in the flux direction is already limited, via a reduction in the absolute value of the torque-forming current component ($i_q$) a voltage reserve for the voltage component ($U_q$) in the flux direction is provided.

**3.** A process according to one of the preceding claims comprising the following further process step:

3.1 if the absolute value of the torque-forming current component ($i_q$) is to be reduced and the voltage component ($U_q$) at right angles to the flux direction is already limited, via a reduction in the field-forming current component ($i_d$) a voltage reserve for the voltage component ($U_q$) at right angles to the flux direction is provided.

**4.** A process according to one of the preceding claims comprising the following further process step:

4.1 a limitation of the voltage in the flux direction ($U_q$) and the voltage at right angles to the flux direction ($U_q$) is additionally effected by means of a preliminary control with limitation characteristics (11, 13) for the field-forming current component ($i_d$) and the torque-forming current component ($i_q$) which are speed-dependent and/or load-dependent.

**5.** A process according to one of the preceding claims comprising the following further process steps:

5.1 a reduction in the absolute value of the torque-forming current component ($i_q$) is effected by deriving a limitation characteristic (11) for the torque-forming current component ($i_q$) from the voltage component ($U_q$) in the flux direction,
5.2 a reduction in the field-forming current component ($i_d$) is effected by deriving a setpoint value ($\Delta\Psi^*$ and $\Delta i_d^*$) for the field-forming current component ($i_d$) from the voltage component ($U_q$) at right angles to the flux direction.

**6.** A process according to one of Claims 1 to 5 comprising the following further process step:

6.1 with increasing magnitude of the torque-forming current component ($i_q$) to be impressed, a voltage setpoint value ($U_{qSpgmax}$) of the controller (24) for reducing the field-forming current component ($i_d$) is successively reduced at the maximum to the value zero.

**7.** A control structure for the implementation of the process according to Claim 1 for the field-oriented control of a synchronous machine at the voltage ceiling comprising the following elements:

7.1 a first current controller (1) for impressing a field-forming current component ($i_d$) in the flux direction is provided, from the output of which a voltage component ($U_q$) in the flux direction can be derived,
7.2 a second current controller (2) for impressing a torque-forming current component ($i_q$) at right angles to the flux direction is provided, from the output of which a voltage component ($U_q$) at right angles to the flux direction can be derived,
7.3 a first maximum voltage controller (23) is provided via which, upon the attainment of a first preset voltage limit ($U_{dmax}$) by the voltage component ($U_d$) in the flux direction, the absolute value of the torque-forming current component ($i_q$) for the second current controller (2) can be reduced,
7.4 a second maximum voltage controller (24) is provided via which, upon the attainment of a second preset voltage limit ($U_{qmax}$) by the voltage component ($U_q$) at right angles to the flux direction, the field-forming current component ($i_d$) for the first current controller (1) can be reduced where
7.5 the field-forming current component ($i_d$) can be preset such that it fulfils the following criterion:

$$i_d \geq -\frac{\Psi}{L_\sigma}$$

where

$\Psi$: absolute value of rotor flux
$L_\sigma$: armature inductance.

7.6 coordinate transformation means (3) are provided which are arranged downstream of the first current controller (1) and second current controller (2) and with which the voltages ($U_r$, $U_s$, $U_t$) which trigger the rotary field of the machine can be generated in accordance with the limited voltage components ($U_d^*$, $U_q^*$) and can be impressed into the synchronous machine (5) via a converter system (4).

**8.** A control structure according to Claim 7 comprising the following further feature:

8.1 the two maximum voltage controllers (23, 24) have the form of integral-action controllers.

**9.** A control structure according to Claim 7 or 8 comprising the following further feature:

9.1 means (30) are provided with which a voltage setpoint value ($U_{qSpgmax}$) for the maximum voltage controller (24) for reducing the field-forming current component ($i_d$) can be generated, where with increasing magnitude of the torque-forming current component ($i_q$) to be impressed, the voltage setpoint value ($U_{qSpgmax}$) can be reduced successively, at the maximum to the value zero.

**Revendications**

**1.** Procédé de régulation à orientation de champ d'une machine synchrone à la limite de tension, comprenant les

étapes suivantes :

1.1 on applique une composante de courant formant le champ ($i_d$) dans la direction du flux par l'intermédiaire d'un premier régulateur de courant (1), duquel est déduit en sortie une composante de tension ($U_d$) dans la direction du flux,
1.2 on applique une composante de courant formant le couple ($i_q$) perpendiculairement à la direction du flux par l'intermédiaire d'un deuxième régulateur de courant (2), duquel est déduit en sortie une composante de tension ($U_q$) perpendiculaire à la direction du flux,
1.3 si la composante de tension ($U_d$) dans la direction du flux atteint une première valeur limite de tension ($U_{dmax}$) prédéterminée, on réduit la valeur absolue de la composante de courant formant le couple ($i_q$),
1.4 si la composante de tension ($U_q$) perpendiculaire à la direction du flux atteint une deuxième valeur limite de tension ($U_{qmax}$) prédéterminée qui peut correspondre à la première valeur limite de tension, on réduit la composante de courant formant le champ ($i_d$),
1.5 on choisit la composante de courant formant le champ ($i_d$) de telle sorte qu'elle satisfait au critère suivant :

$$i_d \geq \frac{\Psi}{L_\sigma}$$

avec

$\Psi$ : valeur absolue du flux rotorique
$L_\sigma$ : inductance de l'induit

1.6 par une transformation de coordonnées (3), on produit les tensions ($U_r$, $U_s$, $U_t$) déclenchant le champ tournant de la machine en fonction des composantes de tension limitées ($U_d^*$, $U_q^*$).

**2.** Procédé selon la revendication 1, comprenant l'étape supplémentaire suivante :

2.1 si on doit réduire la composante de courant formant le champ ($i_d$) et si la composante de tension ($U_d$) dans la direction du flux est déjà limitée, on crée, par l'intermédiaire d'une réduction en valeur absolue de la composante de courant formant le couple ($i_q$), une réserve de tension pour la composante de tension ($U_d$) dans la direction du flux.

**3.** Procédé selon l'une des revendications précédentes, comprenant l'étape supplémentaire suivante :

3.1 si on doit réduire la valeur absolue de la composante de courant formant le couple ($i_q$) et si la composante de tension ($U_q$) perpendiculaire à la direction du flux est déjà limitée, on crée, par l'intermédiaire d'une réduction de la composante de courant formant le champ ($i_d$), une réserve de tension pour la composante de tension ($U_q$) perpendiculaire à la direction du flux.

**4.** Procédé selon l'une des revendications précédentes, comprenant l'étape supplémentaire suivante :

4.1 on effectue en plus une limitation des tensions dans la direction du flux ($U_d$) et perpendiculairement à la direction du flux ($U_q$) au moyen d'une commande préalable avec des courbes caractéristiques de limitation (11, 13) pour les composantes de courant formant le champ ($i_d$) et formant le couple ($i_q$), lesquelles courbes caractéristiques sont dépendantes de la vitesse et/ou de la charge.

**5.** Procédé selon l'une des revendications précédentes, comprenant les étapes supplémentaires suivantes :

5.1 on effectue une réduction de la valeur absolue de la composante de courant formant le couple ($i_q$) en déduisant une courbe caractéristique de limitation (11) pour la composante de courant formant le couple ($i_q$) à partir de la composante de tension ($U_d$) dans la direction du flux,
5.2 on effectue une réduction de la composante de courant formant le champ ($i_d$), en déduisant une valeur de consigne ($\Delta\Psi^*$ ou $\Delta i_d^*$) pour la composante de courant formant le champ ($i_d$) à partir de la composante de tension ($U_q$) perpendiculaire à la direction du flux.

**6.** Procédé selon l'une des revendications 1 à 5, comprenant l'étape supplémentaire suivante :

6.1 si la grandeur de la composante de courant formant le couple ($i_q$) à appliquer augmente, on réduit successivement au maximum jusqu'à atteindre la valeur nulle une valeur de consigne de tension ($U_{qSpgmax}$) du régulateur (24) pour la réduction de la composante de courant formant le champ ($i_d$).

**7.** Structure de régulation pour la mise en oeuvre du procédé selon la revendication 1 pour la régulation à orientation de champ d'une machine synchrone à la limite de tension, comportant les éléments suivants :

7.1 il est prévu un premier régulateur de courant (1) qui est destiné à appliquer une composante de courant formant le champ ($i_d$) dans la direction du flux et duquel peut être déduite en sortie une composante de tension ($U_d$) dans la direction du flux,
7.2 il est prévu un deuxième régulateur de courant (2) qui est destiné à appliquer une composante de courant formant le couple ($i_q$) perpendiculairement à la direction du flux et duquel peut être déduite en sortie une composante de tension ($U_q$) perpendiculaire à la direction du flux,
7.3 il est prévu un premier régulateur de maximum de tension (23) par l'intermédiaire duquel, lorsque la composante de tension ($U_d$) dans la direction du flux atteint une première limite de tension ($U_{dmax}$) prédéterminée, la valeur absolue de la composante de courant formant le couple ($i_q$) pour le deuxième régulateur de courant (2) peut être réduite,
7.4 il est prévu un deuxième régulateur de maximum de tension (24) par l'intermédiaire duquel, lorsque la composante de tension ($U_q$) perpendiculaire à la direction du flux atteint une deuxième limite de tension ($U_{qmax)}$ prédéterminée, la valeur absolue de la composante de courant formant le champ ($i_d$) pour le premier régulateur de courant (1) peut être réduite,
7.5 la composante de courant formant le champ ($i_d$) pouvant être prescrite de telle sorte qu'elle satisfait au critère suivant :

$$i_d \geq -\frac{\Psi}{L_\sigma}$$

avec

$\Psi$ : valeur absolue du flux rotorique
$L_\sigma$ : inductance de l'induit,

7.6 il est prévu un moyen destiné à la transformation de coordonnées (3) qui est monté du côté aval des premier (1) et deuxième (2) régulateurs de courant et par lequel les tensions ($U_r$, $U_s$, $U_t$) déclenchant le champ tournant de la machine peuvent être produites en fonction des composantes de tension limitées ($U_d$*, $U_q$*) et peuvent être appliquées dans la machine synchrone (5) par l'intermédiaire d'un système convertisseur (4).

**8.** Structure de régulation selon la revendication 7, comportant la caractéristique supplémentaire suivante :

8.1 les deux régulateurs de maximum de tension (23, 24) sont conçus comme des régulateurs à comportement intégral.

**9.** Structure de régulation selon la revendication 7 ou 8, comportant la caractéristique supplémentaire suivante :

9.1 il est prévu un moyen (30) par lequel il peut produit, pour la réduction de la composante de courant formant le champ ($i_d$), une valeur de consigne de tension ($U_{qSpgmax}$) pour le régulateur de maximum de tension (24), la valeur de consigne de tension ($U_{qspgmax}$) pouvant être réduite successivement au maximum jusqu'à la valeur nulle, au fur et à mesure que la grandeur de la composante de courant formant le couple ($i_q$) à appliquer augmente.

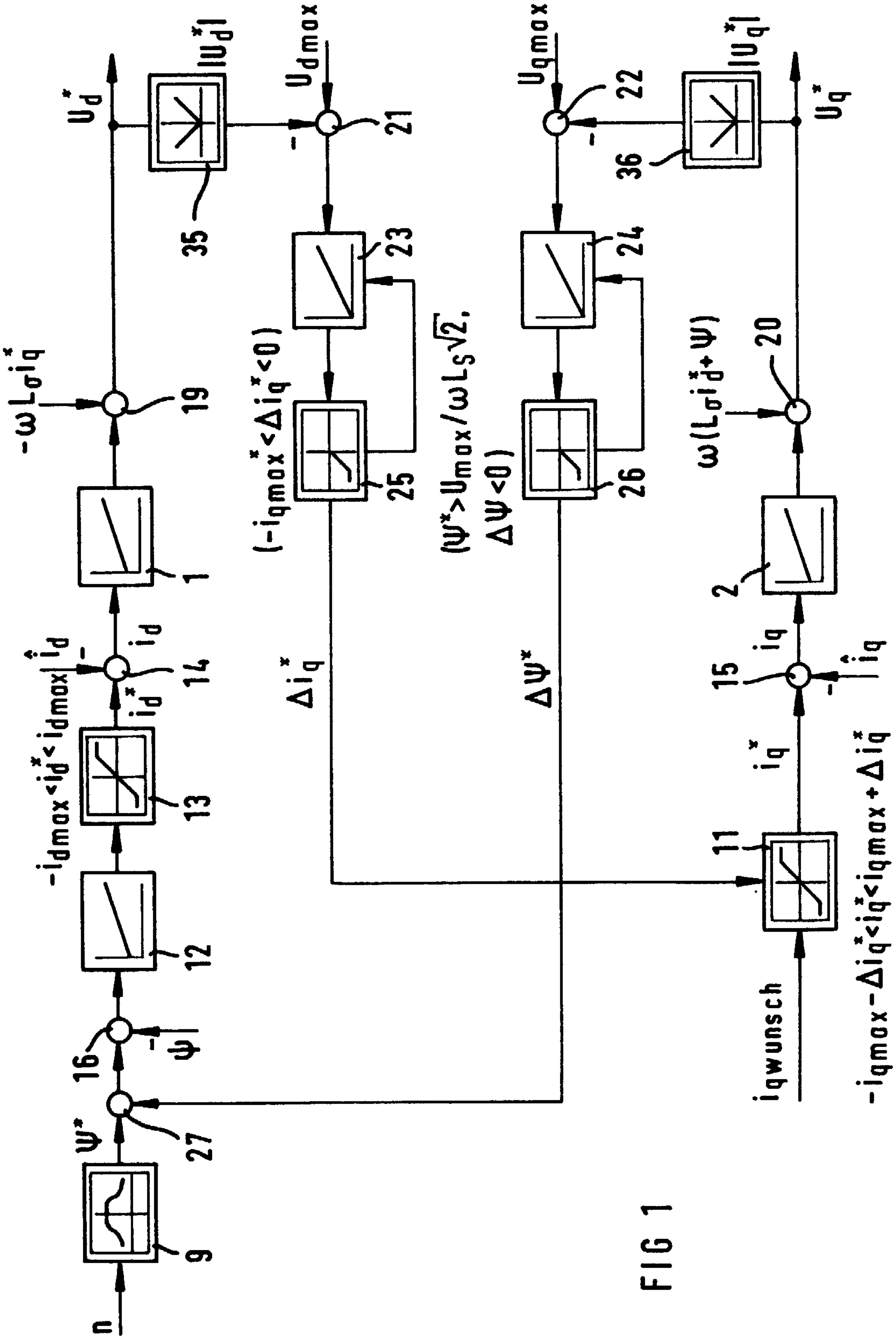
n
9
Ψ*
27
16
-
Ψ
12
$-i_{dmax}<i_d^*<i_{dmax}$
13
$i_d^*$
14
-
$\hat{i}_d$
$i_d$
1
19
$-\omega L_\sigma i_q^*$
$U_d^*$
35
$|U_d^*|$
$U_{dmax}$
-
21
23
25
$(-i_{qmax}^*<\Delta i_q^*<0)$
$\Delta i_q^*$
$(\Psi^*>U_{max}/\omega L_S\sqrt{2},$
$\Delta\Psi<0)$
24
26
$\Delta\Psi^*$
$U_{qmax}$
22
-
36
$|U_q^*|$
$U_q^*$
20
$\omega(L_\sigma i_d^*+\Psi)$
2
$i_q$
15
-
$\hat{i}_q$
$i_q^*$
11
$i_{qwunsch}$
$-i_{qmax}-\Delta i_q^*<i_q^*<i_{qmax}+\Delta i_q^*$

FIG 1

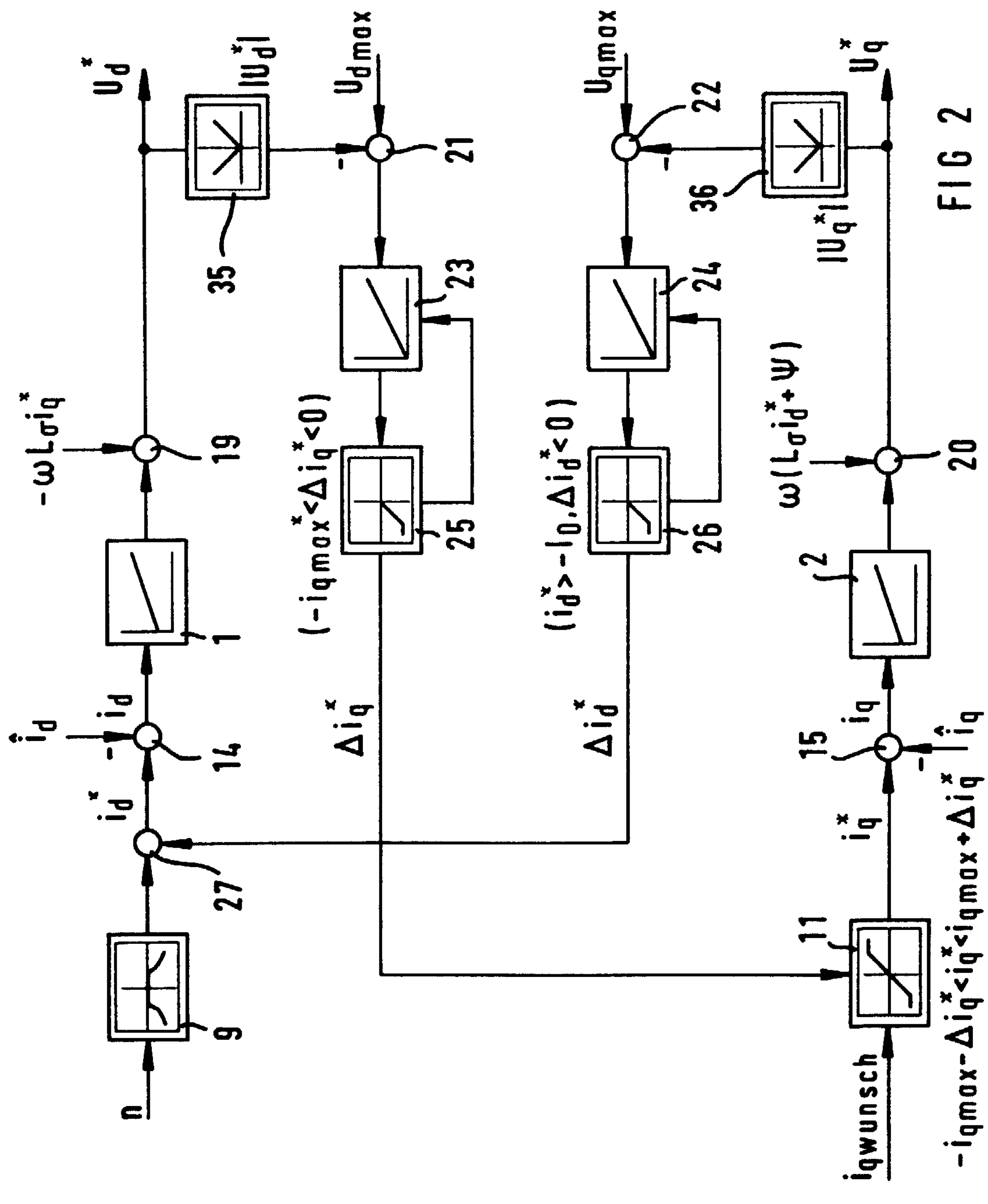

n
9
27
$i_d^*$
$\hat{i}_d$
14
$i_d$
1
$-\omega L_\sigma i_q^*$
19
$U_d^*$
35
$|U_d^*|$
$U_{dmax}$
21
23
25
$(-i_{qmax}^* < \Delta i_q^* < 0)$
$\Delta i_q^*$
$U_{qmax}$
22
24
26
$(i_d^* > -I_0, \Delta i_d^* < 0)$
$\Delta i_d^*$
36
$|U_q^*|$
$U_q^*$
$\omega(L_\sigma i_d^* + \Psi)$
20
2
$i_q$
15
$\hat{i}_q$
$i_q^*$
11
$i_{qwunsch}$
$-i_{qmax} - \Delta i_q^* < i_q^* < i_{qmax} + \Delta i_q^*$


FIG 2

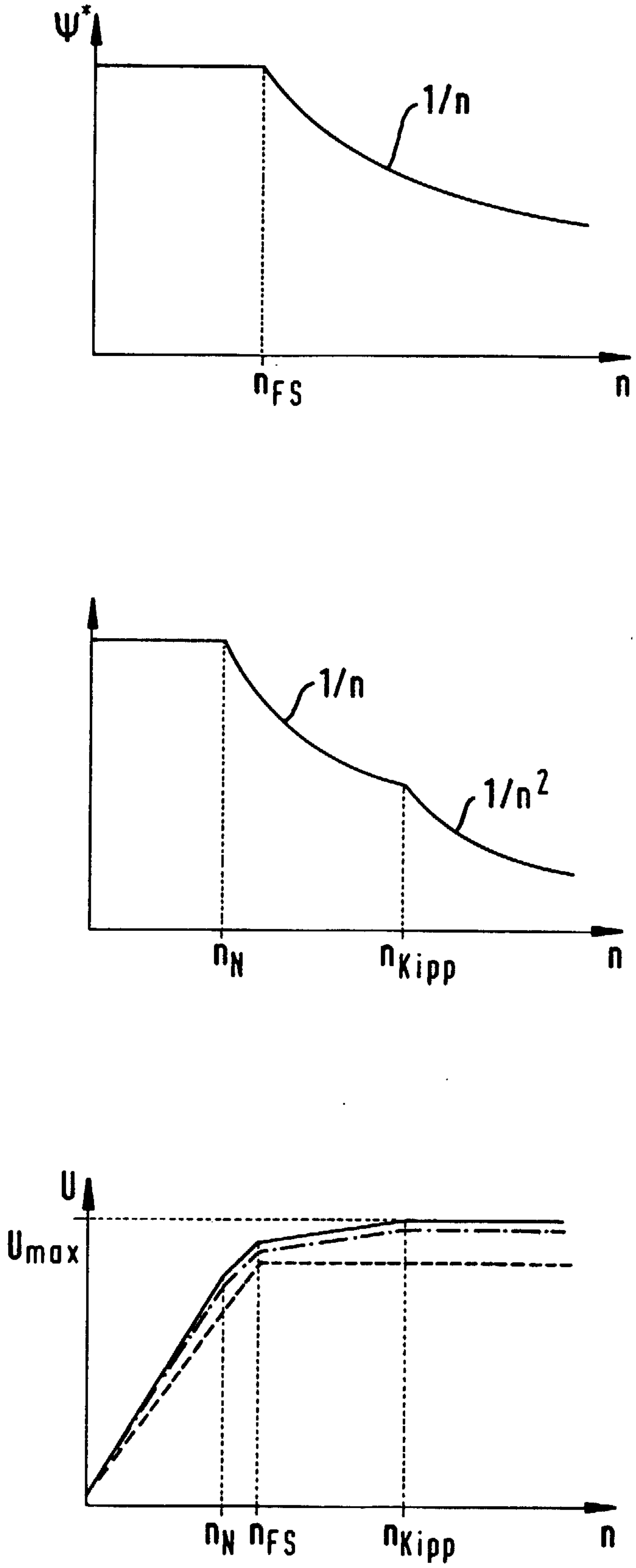


FIG 3

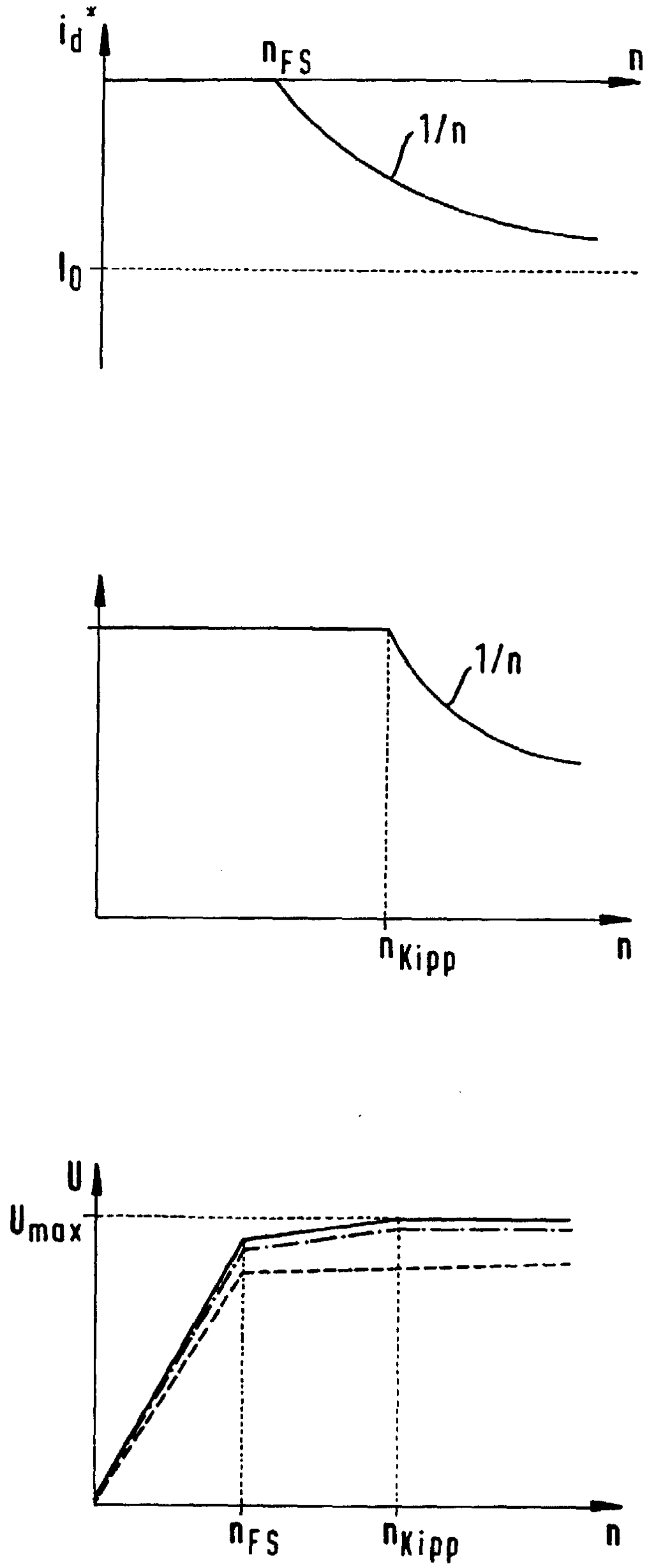


FIG 4

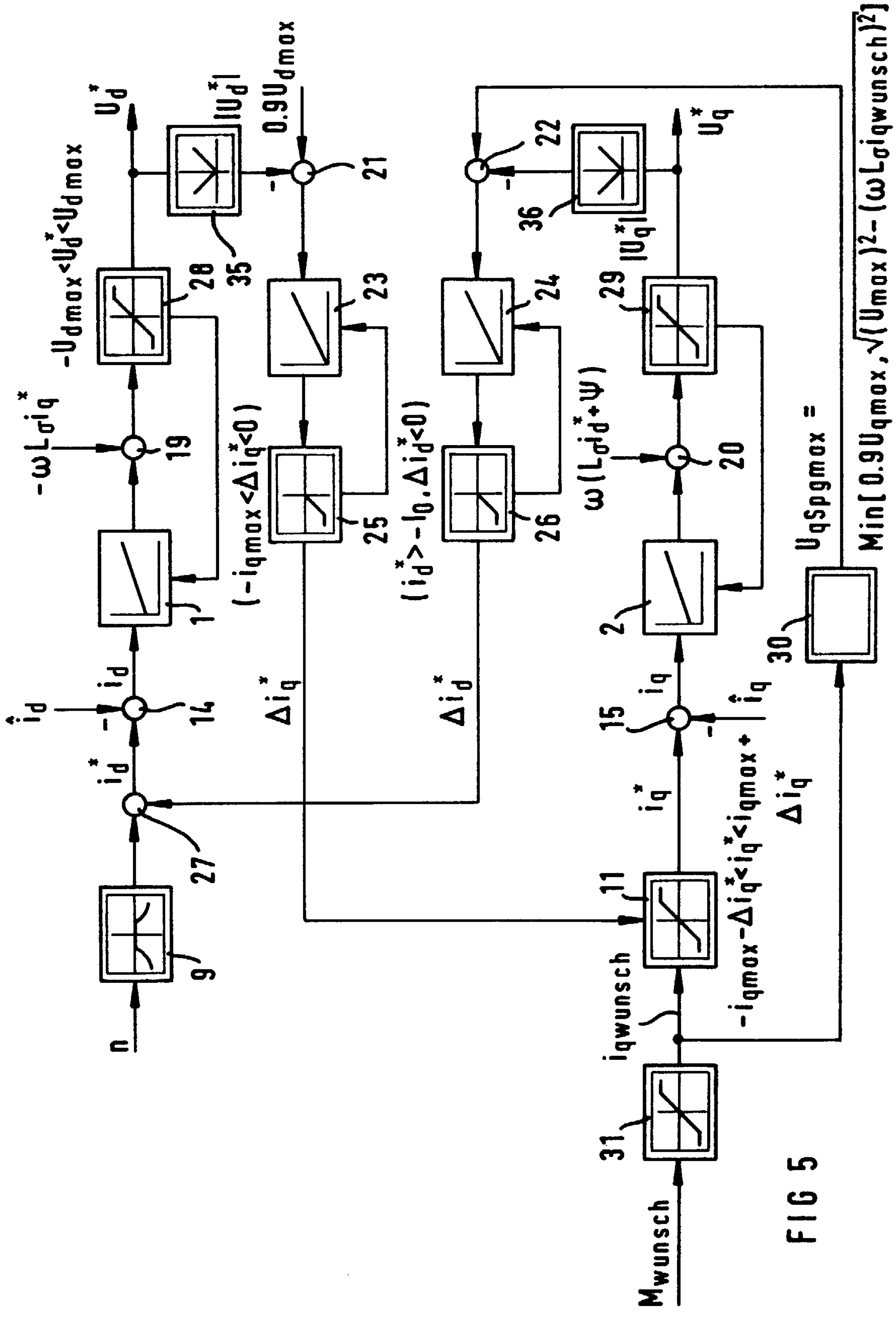
n
9
27
$i_d^*$
$\hat{i}_d$
14
$i_d$
1
$-\omega L_\sigma i_q^*$
19
28
$-U_{dmax}<U_d^*<U_{dmax}$
$U_d^*$
35
$|U_d^*|$
21
$0.9U_{dmax}$
23
25
$(-i_{qmax}<\Delta i_q^*<0)$
$\Delta i_q^*$
24
26
$(i_d^*>-I_0, \Delta i_d^*<0)$
$\Delta i_d^*$
22
36
$|U_q^*|$
$U_q^*$
29
20
$\omega(L_\sigma i_d^*+\Psi)$
2
15
$i_q$
$\hat{i}_q$
$i_q^*$
11
$-i_{qmax}-\Delta i_q^*<i_q^*<i_{qmax}+\Delta i_q^*$
$i_{qwunsch}$
31
$M_{wunsch}$
30
$U_{qSpgmax}$ =
$Min[0.9U_{qmax}, \sqrt{(U_{max})^2-(\omega L_\sigma i_{qwunsch})^2}]$

FIG 5

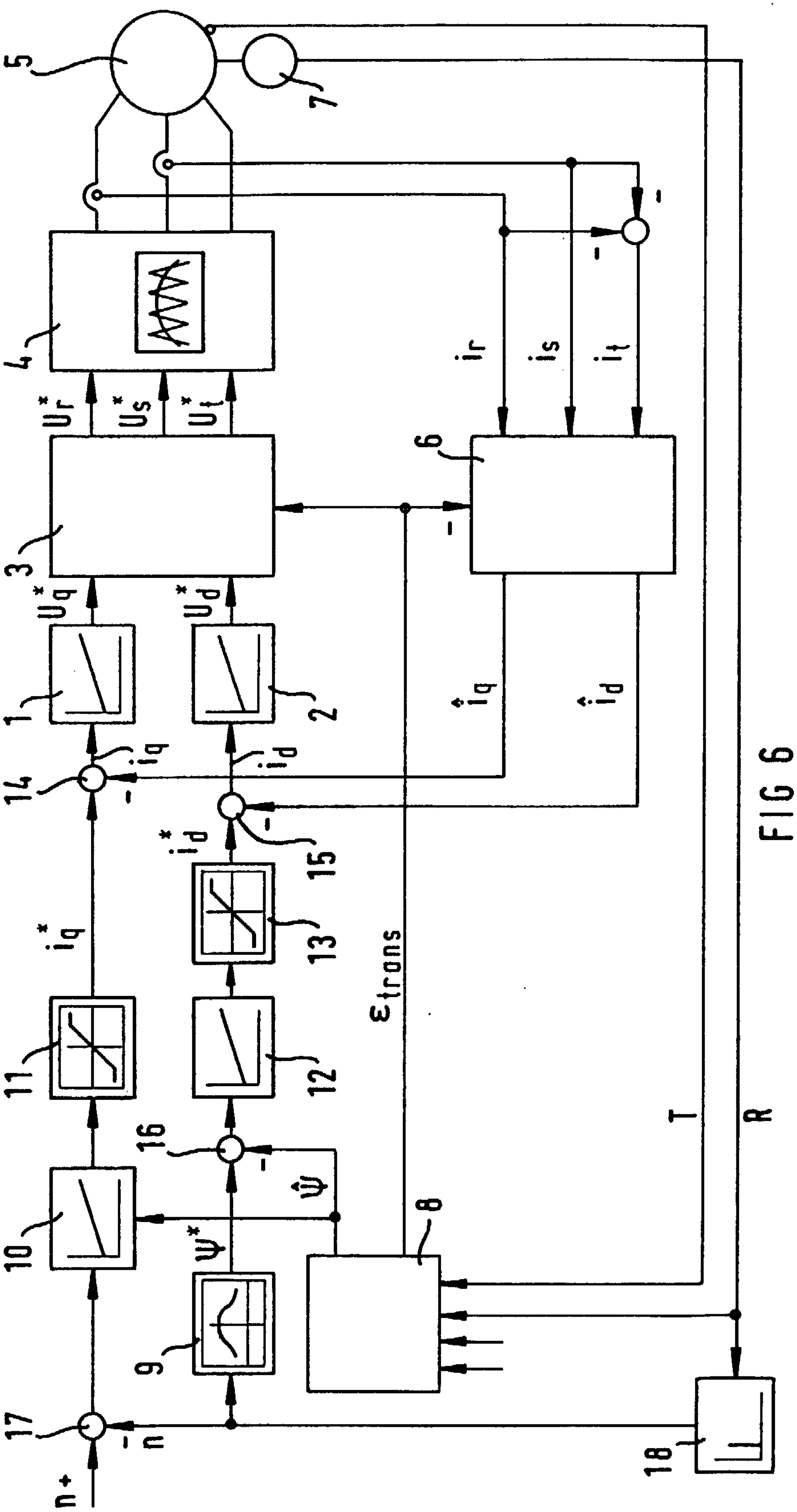
1
2
3
4
5
6
7
8
9
10
11
12
13
14
15
16
17
18
n*
n
Ψ*
Ψ̂
i*q
i*d
iq
id
îq
îd
U*q
U*d
U*r
U*s
U*t
ir
is
it
εtrans
T
R

FIG 6